# EUROPEAN PATENT APPLICATION

(11) **EP 3 040 271 A1**
(43) Date of publication of application: **06.07.2016**
(21) Application number: 16150062.4
(22) Date of filing: 04.01.2016
(51) Int. Cl.: B64D 9/00, B60P 7/08, B60P 7/13, B65G 7/06, B64C 1/20

(54) **AIR CUSHION AIRCRAFT CARGO LOADING SYSTEMS AND MANUALLY-OPERATED CONFORMAL TIE OFF POINT**

(30) Priority: 05.01.2015 US 201514589821
(71) Applicant: Goodrich Corporation, Charlotte, North Carolina 28217-4578 (US)
(72) Inventor: HIMMELMANN, Richard A., Beloit, WI Wisconsin 53511 (US)
(74) Representative: Hughes, Andrea Michelle

(57) **Abstract**

A cargo management system is provided comprise a floor panel 112 defining a recess, and a tie point 122 disposed in the recess and configured to rotate about an axis. A rotatable tie point is also provided comprising a drum 130 configured to rotate about an axis and a cleat 126 coupled to the drum.

## Description

### FIELD OF INVENTION

The present disclosure relates to aircraft cargo loading systems, and, more specifically, to a cargo tie off point for a cargo loading system.

### BACKGROUND

Conventional aircraft cargo systems typically include various tracks and rollers that span the length of an aircraft. Power drive units ("PDUs") convey cargo forward and aft along the aircraft on conveyance rollers which are attached to the aircraft floor structure. Cargo may be loaded from an aft position on an aircraft and conducted by the cargo system to a forward position and/or, depending upon aircraft configuration, cargo may be loaded from a forward position on an aircraft and conducted by the cargo system to an aft position. Conventional systems are typically designed to accommodate a particular pallet size. Conventional systems are typically comprised of numerous components that may be time consuming to install, replace and maintain.

### SUMMARY

A cargo management system may comprise a floor panel defining a recess, and a tie point disposed in the recess and configured to rotate about an axis.

In various embodiments, the tie point may comprise a drum. The drum may include a latch socket. A latch may interface with the latch socket. The latch may comprise a release button. The latch may be configured to disengage the latch slot in response to the latch button being depressed. The drum may be configured to rotate in response to the latch disengaging the latch slot. A contour of the drum may match a contour of the recess defined by the floor panel.

A rotatable tie point may comprise a drum configured to rotate about an axis, and a cleat coupled to the drum.

In various embodiments, the drum may comprise a latch socket. A latch may be configured to interface with the latch socket. The latch comprises a spring to drive the latch into the latch socket. The drum may be spring loaded to automatically rotate in response to the latch disengaging the latch socket. The drum may comprise aluminum. The drum may also comprise a contoured surface to limit air leakage along the contoured surface.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures.
FIG. 1 illustrates a portion of a cargo management system with stowable tie points, in accordance with various embodiments;
FIG. 2 illustrates a portion of a cargo management system, in accordance with various embodiments;
FIG. 3 illustrates a portion of a cargo management system, in accordance with various embodiments;
FIG. 4 illustrates the underside of an air cushion cargo shuttle guide assembly, in accordance with various embodiments;
FIG. 5A illustrates a surface of a floor panel with a conformal tie point in a stowed position, in accordance with various embodiments;
FIG. 5B illustrates a surface of a floor panel with a conformal tie point in a deployed configuration, in accordance with various embodiments;
FIG. 6A illustrates a cross-sectional view of a conformal tie point in a stowed configuration, in accordance with various embodiments;
FIG. 6B illustrates a cross-sectional view of a conformal tie point in a deployed configuration, in accordance with various embodiments; and
FIG. 7 illustrates a latch mechanism for use with a conformal tie point, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the invention as defined in the claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option.

As used herein, "aft" refers to the direction associated with the tail of an aircraft, or generally, to the direction of exhaust of the gas turbine. As used herein, "forward" refers to the direction associated with the nose of an aircraft, or generally, to the direction of flight or motion.

Aircraft cargo management systems, as disclosed herein, allow cargo to be loaded into an aircraft and positioned within the aircraft in a simple, elegant manner. In that regard, aircraft cargo management systems as disclosed herein may reduce part count and associated replacement/wear costs over time.

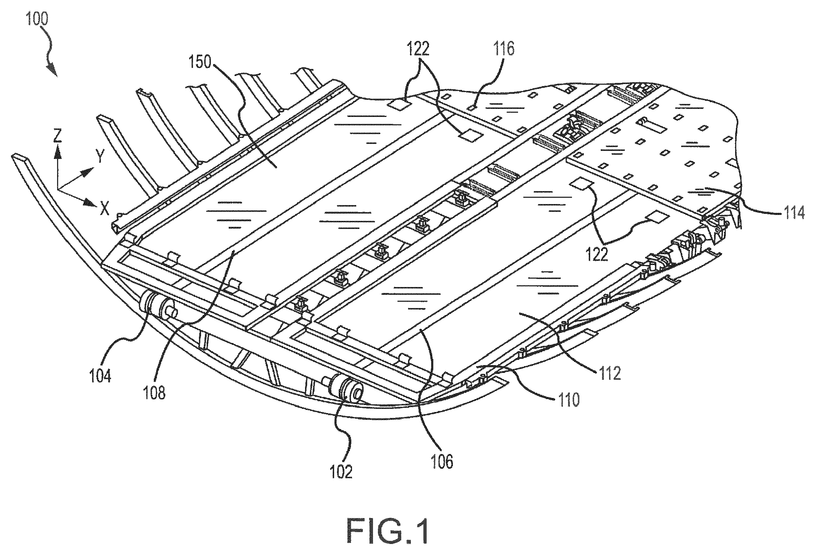

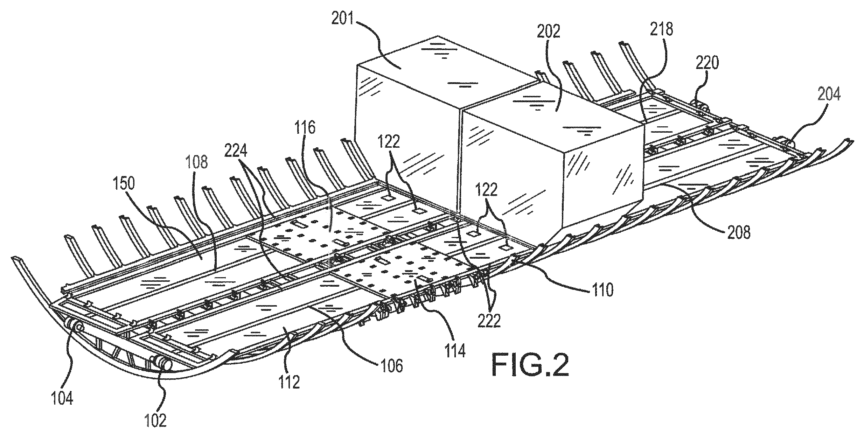

With reference to FIGs. 1 and 2 aircraft cargo management system 100 is illustrated. Air cushion cargo shuttles 114 and 116 are shown forward of an aft portion of an aircraft. Air cushion cargo shuttle 114 is coupled to aft drive shuttle belt 106 and air cushion cargo shuttle 116 is coupled to aft drive shuttle belt 108. Aft drive shuttle belt 106 is coupled to aft shuttle drive unit 102. Aft drive shuttle belt 108 is coupled to aft shuttle drive unit 104. Floor panel 112 is shown beneath air cushion cargo shuttle 114. Floor panel 150 is shown beneath air cushion cargo shuttle 116. As used with respect to air cushion cargo shuttle 114 and 116, the term "beneath" may refer to the negative z direction. Tie points 122 are shown in a stowed position, disposed in recesses defined by floor panel 112 and floor panel 150. Support rails 222 and 224 are shown laterally adjacent to floor panels 112 and 150. Support rails 222 and 224 may be mounted to another aircraft component, such as an airframe, and may be capable of supporting the weight of cargo. Floor panel 112 may comprise at least one of a composite material or a metallic material.

Air cushion cargo shuttle 114 is coupled to forward drive shuttle belt 208 and air cushion cargo shuttle 116 is coupled to forward drive shuttle belt 218. Forward drive shuttle belt 208 is coupled to forward shuttle drive unit 204. Forward drive shuttle belt 218 is coupled to forward shuttle drive unit 220. Cargo 202 is shown as resting on support rails 222 and cargo 201 is shown as resting on support rails 224. Air cushion cargo shuttle 116 may be used to lift cargo 201 off support rails 224 and move cargo 201 forward or aft.

Forward drive shuttle belt 208, forward drive shuttle belt 218, aft drive shuttle belt 106, and aft drive shuttle belt 108 (collectively, a "shuttle belt system") may comprise any suitable belt capable of pulling an air cushion cargo shuttle. For example, a shuttle belt may comprise a flat belt. In that regard, a flat shuttle belt may not occupy excess space along the z direction. For example, a shuttle belt may comprise a polyurethane and/or polytetrafluoroethylene (PTFE) coated belt that includes a communications and power bus. In that regard, the structural support and power/data functions are provided by a single shuttle belt structure. For example, in various embodiments, a shuttle belt may comprise steel wires oriented in parallel and coated with polyurethane to hold the steel wires together, provide anti-friction properties, and noise dampening properties. Among the steel wires may be copper wires or other wires that are capable of carrying an electrical current at any suitable voltage. In that regard, the shuttle belt may comprise one or more copper wires to carry high voltage power and/or low voltage electrical signals that may convey data.

The shuttle belts may be wound around a portion of forward shuttle drive unit 204, forward shuttle drive unit 220, aft shuttle drive unit 102 and aft shuttle drive unit 104 (collectively, "shuttle drive unit"). In that regard, a shuttle drive unit may comprise a cylindrical structure (e.g., a bobbin) to which a shuttle belt is affixed. The shuttle drive unit comprises a motive device, such as an electric motor, to rotate the bobbin in a desired direction. The shuttle drive unit may also disengage the electric motor or be otherwise geared to apply resistive force in such a manner so that the bobbin is allowed to rotate in a reverse direction. In various embodiments, the electric motor may provide the resistive force by providing negative torque to the gear system and regenerating power back to the aircraft power bus. Thus, as forward shuttle drive unit 204 may be rotating its bobbin to pull forward drive shuttle belt 208 forward, aft shuttle drive unit 102 may allow its bobbin to freely rotate in response to the force exerted by forward drive shuttle belt 208 through air cushion cargo shuttle 114. In like manner, as aft shuttle drive unit 102 may be rotating its bobbin to pull aft drive shuttle belt 106 aft, forward shuttle drive unit 204 may allow its bobbin to freely rotate in response to the force exerted by aft drive shuttle belt 106 through air cushion cargo shuttle 114.

Accordingly, as forward shuttle drive unit 220 may be rotating its bobbin to pull forward drive shuttle belt 218 forward, aft shuttle drive unit 104 may allow its bobbin to freely rotate in response to the force exerted by forward drive shuttle belt 218 through air cushion cargo shuttle 116. In like manner, as aft shuttle drive unit 104 may be rotating its bobbin to pull aft drive shuttle belt 108 aft, forward shuttle drive unit 220 may allow its bobbin to freely rotate in response to the force exerted by aft drive shuttle belt 108 through air cushion cargo shuttle 116.

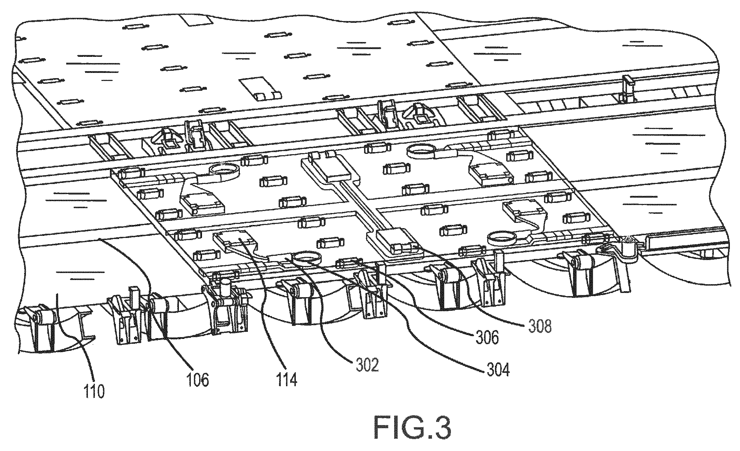

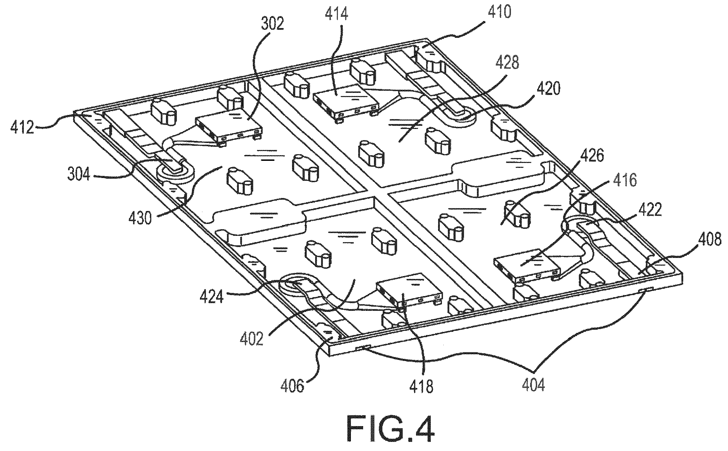

With reference to FIGs. 3 and 4, air cushion cargo shuttle 114 is shown. It should be understood that air cushion cargo shuttle 116 is similarly structured and thus the features discussed herein relative to air cushion cargo shuttle 114 are also applicable to air cushion cargo shuttle 116. Power drive unit 308 and roller 306 are shown in air cushion cargo shuttle 114. Power drive unit 308 may drive cargo such as cargo 202, onto and off air cushion cargo shuttle 114. Roller 306 may facilitate movement of cargo 202 with respect to air cushion cargo shuttle 114.

Centrifugal air blower 304 is shown coupled beneath air cushion cargo shuttle 114. Air cushion cargo shuttle 114 may comprise one or more centrifugal air blowers.

Centrifugal air blower 304 is controlled by centrifugal air blower controller 302. Air cushion cargo shuttle 114 may comprise one or more centrifugal air blower controllers. In various embodiments, each centrifugal air blower has one associated centrifugal air blower controller, though in various embodiments one centrifugal air blower controller controls multiple centrifugal air blowers. Centrifugal air blower controller 302 may provide power and instructions to centrifugal air blower 304 to control how and when centrifugal air blower 304 operates. Centrifugal air blower 304 comprises inlets 404. Inlets 404 allow the centrifugal air blower 304 to receive air from outside volume 402 and deliver that air to volume 402. In various embodiments, each centrifugal air blower has one associated inlet, though in various embodiments one centrifugal air blower is associated with multiple inlets. In further embodiments, a single inlet may supply air to one or more centrifugal air blowers.

Volume 402 of air cushion cargo shuttle 114 is shown in fluid communication with an outlet of centrifugal air blower 304. In that regard, centrifugal air blower 304 may blow air beneath air cushion cargo shuttle 114 and, more specifically, into volume 402. Volume 402 is shown in proximity to floor panel 112.

As shown, air cushion cargo shuttle 114 has four centrifugal air blower controllers 302, 414, 416, and 418 driving four centrifugal air blowers 304, 420, 422, and 424 to blow air into four different volumes 402, 426, 428, and 430. Each centrifugal air blower controller may further comprise a proximity sensor that may be configured to measure the proximity of a portion of air cushion cargo shuttle 114 to floor panel 112. For example, proximity sensors 406, 408, 410 and 412 may be associated with each centrifugal air blower controller 302, 414, 416, and 418. Proximity sensors 406, 408, 410 and 412 may be used in a closed loop control mechanism to modulate the output of four centrifugal air blowers 304, 420, 422, and 424. In that regard, centrifugal air blower controllers 302, 414, 416, and 418 may command four centrifugal air blowers 304, 420, 422 to blow air into volumes 402, 426, 428, and 430 until the proximity sensors 406, 408, 410 and 412 indicate that a desired proximity has been reached.

Moreover, data from proximity sensors 406, 408, 410 and 412 may be used to detect and compensate for uneven cargo loads. For example, in the event cargo 202 shifts to one portion of air cushion cargo shuttle 114 or otherwise exerts more force on a portion of air cushion cargo shuttle 114 relative to another, data from proximity sensors 406, 408, 410 and 412 may detect that one portion of air cushion cargo shuttle 114 is not as far from floor panel 112 as one or more other portions of air cushion cargo shuttle 114. In that regard, where insufficient distance from floor panel 112 is achieved, a centrifugal air blower controller may command its associated centrifugal air blower to increase output to compensate for the uneven load.

In that regard, in operation, cargo such as cargo 202 may be loaded onto air cushion cargo shuttle 114 at an aft position, such as a position proximate aft shuttle drive unit 102. Cargo 202 may be positioned onto air cushion cargo shuttle 114 using power drive unit 308 and roller 306. During loading of cargo 202, air cushion cargo shuttle 114 may be in contact with floor panel 112. Once cargo 202 is suitably positioned on top of air cushion cargo shuttle 114 (where the phrase "on top" in this context may refer to distance across the positive z direction), a control system for centrifugal air blower controller 302 may instruct centrifugal air blower 304 to begin operation. In this manner, air from inlets 404 is pulled into centrifugal air blower 304 and centrifugal air blower 304 blows this air into volume 402. As more air is blown into volume 402, the increased air pressure may act to lift air cushion cargo shuttle 114 apart from floor panel 112. In this context, the phrase "lift apart" may refer to movement of air cushion cargo shuttle 114 in the positive z direction. In various embodiments, the pressure in volume 402 may reach between 1 psi (6.89 kPa) to 10 psi (68.9 kPa), between 2 psi (13.7 kPa) and 6 psi (41.3 kPa), and about 4 ps (27.5 kPa), where the term about in this context may refer to +/- 0.5 psi (3.4 kPa).

A control system comprising, for example, a processor and a tangible, non-transitory memory may be configured to be in electrical and/or logical communication with centrifugal air blower controller 302. For example, the control system may communicate with centrifugal air blower controller 302 via one or more shuttle belts. The control system may instruct the centrifugal air blower controller 302 to start, stop, and modulate the output of centrifugal air blower 304.

During operation of centrifugal air blower 304, cargo 202 may lift apart from floor panel 112, thus reducing the friction between air cushion cargo shuttle 114 and the floor panel 112. Stated another way, dry friction may be equal to the coefficient of friction multiplied by the normal force. By eliminating the contact between air cushion cargo shuttle 114 and the floor panel 112, the two surfaces do not interact to cause friction. In various embodiments, there may be contact between air cushion cargo shuttle 114 and the floor panel 112 during operation of centrifugal air blower 304, though the air pressure will oppose the normal force (i.e., force in the negative z direction) exerted by cargo 202 and thus friction will be reduced because of this reduction in the normal force.

While cargo 202 is lifted apart from floor panel 112, the forward shuttle drive unit 204 may rotate its bobbin, causing forward drive shuttle belt 208 to pull air cushion cargo shuttle 114 and cargo 202 forward. Air cushion cargo shuttle 114 may pass over tie points 122 in a stowed configuration. Aft shuttle drive unit 104 may be allowed to exert a low level drag force on aft drive shuttle belt 108, thus allowing aft drive shuttle belt 108 to extend in a forward direction. A low level drag force exerted by aft shuttle drive unit 104 may prevent excessive cargo velocity and may maintain stability in the event an aircraft is not precisely level. Once cargo 202 is positioned in the aircraft at a desired position, the control system may instruct the centrifugal air blower controller 302 to turn off or lower the output of centrifugal air blower 304. In that regard, due to loss of air pressure in volume 402, air cushion cargo shuttle 114 may move in a negative z direction and contact floor panel 112. As air cushion cargo shuttle 114 moves towards floor panel 112, cargo 202 may come to rest on support rails 222. Thus, the air cushion cargo shuttle 114 may separate from the cargo 202 as the cargo 202 is restrained from motion in the negative z direction by support rails 222. In this manner, air cushion cargo shuttle 114 may be brought aft to load additional cargo. The aft shuttle drive unit 102 may rotate its bobbin, causing aft drive shuttle belt 108 to pull air cushion cargo shuttle 114 aft. Additional cargo may now be loaded and the process may proceed again.

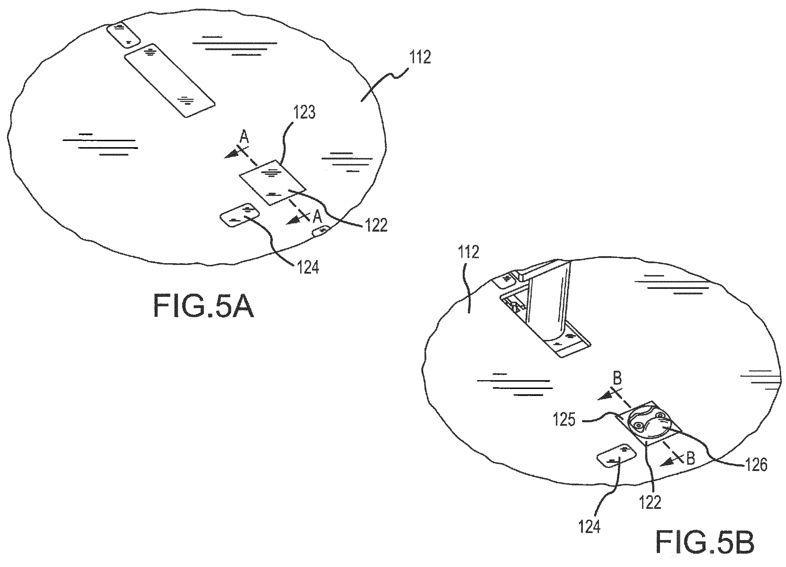

With reference to FIG. 5A, tie point 122 is shown in a stowed position, in accordance with various embodiments. Tie point 122 has a surface 123 exposed from floor panel 112. Surface 123 may be flat and flush with floor panel 112. Surface 123 may also be recessed beneath floor panel 112. Surface 123 may allow air cushion cargo shuttle 114 to pass over tie point 122 elevated from floor panel 112 on a thin film of air. Tie point 122 may be locked in place in the stowed position. Release button 124 may release tie point 122 in response to being depressed. In that regard, release button 124 allows tie point 122 to rotate into a deployed configuration in response to the release button being depressed.

With reference to FIG. 5B, tie point 122 is shown in a deployed position, in accordance with various embodiments. Tie point 122 may have surface 125 exposed from floor panel 112 in the deployed position. Tie point 122 is retractable in that it may be positioned in a deployed position or a stowed position. Cleat 126 may be coupled to surface 125 of tie point 122, for example, by fasteners. Tie point 122 may lock into the deployed position and release in response to depression of release button 124. In various embodiments, tie point 122 may be made from metallic materials such as aluminum, titanium, steel, polymer, and/or other metals and/or alloys. Machining processes (e.g., turning), forging, and/or additive processes may be used to form tie point 122, for example.

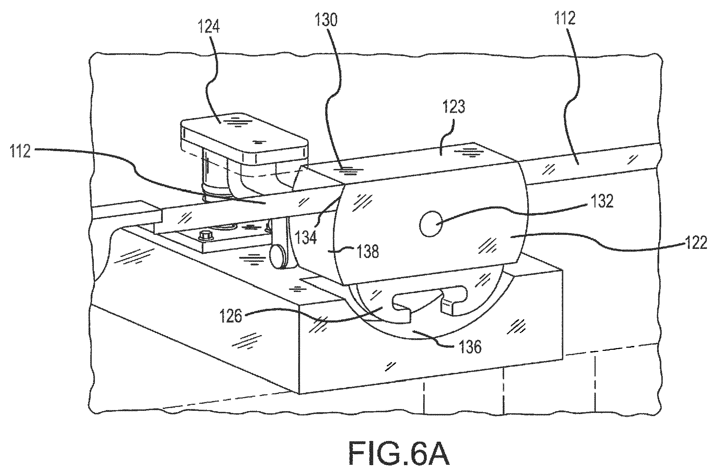

With reference to FIG. 6A, a cross section of tie point 122 along line A of FIG. 5A is shown with floor panel 112 cutaway, in accordance with various embodiments. Tie point 122 may comprise drum 130. Drum 130 may be spring loaded to automate rotation about central axis 132 in response to depression of release button 124. The drum may also be manually rotated about central axis 132 from a stowed position to a deployed position, or from a deployed position to a stowed position, if drum 130 is not spring loaded. Cleat 126 and drum 130 may have a somewhat rounded geometry, as shown, to interface tightly with floor panel 112. Floor panel 112 may have a contoured surface 134 that matches the shape of drum 130 so that when tie point 122 is in a closed position, floor panel 112 and drum 130 have a minimal gap to limit air leakage. For example, the gap between drum 130 of tie point 122 in the stowed position and floor panel 112 may be less than an eighth of an inch (32 mm). Contoured surface 138 of drum 130 may maintain the narrow gap between drum 130 and floor panel 112 as drum 130 rotates about central axis 132. Mounting bracket 137 may have contoured surface 136 to match the contour of drum 130 and cleat 126. Contoured surface 136 may provide space to accept cleat 126 in response to tie point 122 being in a stowed position.

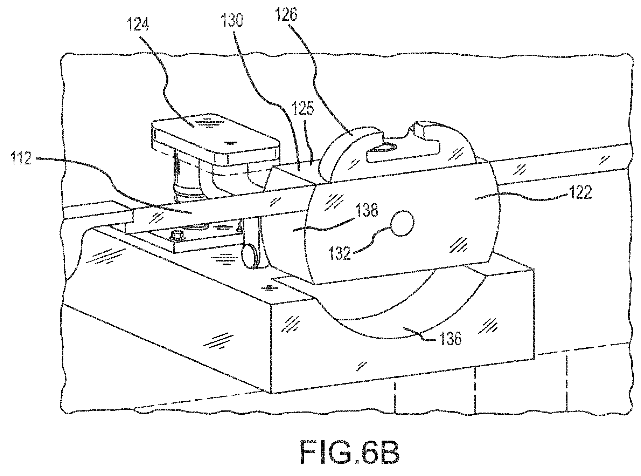

With reference to FIG. 6B, a cross section of tie point 122 along line B of FIG. 5B is shown with floor panel 112 cutaway, in accordance with various embodiments. Drum 130 is shown in a deployed state that is rotated about central axis 132 approximately 180 degrees from the stowed position of FIG. 5A. The gap between contoured surface 134 of floor panel 112 and contoured surface 138 of drum 130 is minimized due to the matching contours contoured surface 134 and contoured surface 138. Contoured surface 134 may have a hemispherical or semicircular geometry. Tie point 122 may be rotated about central axis 132 into a stowed position by depressing release button 124. Drum 130 may be spring loaded to automatically rotate in response to the depression of release button 124. Drum 130 may also be manually rotated about central axis 132 in response to release button 124 being depressed to release drum 130. In the deployed configuration, cleat 126 may be exposed from floor panel 112 to secure cargo to tie point 122. Space provided by contoured surface 136 of mounting bracket 137 to house cleat 126 in the stowed position may be vacant in the deployed position.

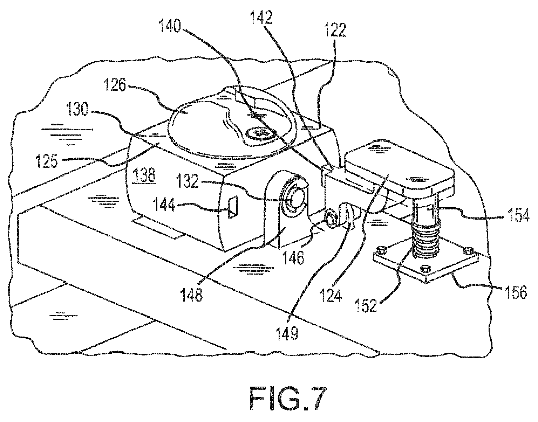

With reference to FIG. 7, a latch 142 for use with tie point 122 is shown with floor panel 112 removed, in accordance with various embodiments. Drum 130 of tie point 122 is shown mounted to mounting bracket 137 with cleat 126 on surface 125 in a deployed position. Contoured surface 138 of mounting bracket 137 is disposed below drum 130. Central axis 132 may be defined by a pin or bolt inserted through a pair of protruding connectors and through drum 130. In that regard, drum 130 may rotate around the bolt or pin. Protrusions 148 and central axis 132 may form a clevis-type connection with drum 130. Similarly, latch 142 may comprise protrusions that form a clevis-type connection with protrusion 149 from mounting bracket 137. Axis 146 may comprise a bolt or pin that passes through protrusions 143 and protrusion 149 to enable latch 142 to pivot on axis 146.

In various embodiments, drum 130 comprises one or more latch sockets to receive latch 142 and fix drum 130 in a deployed or stowed position. As shown in FIG. 7, latch socket 144 and latch socket 140 may retain latch 142 in the stowed and deployed positions, respectively. Latch 142 comprises piston 154 coupled between release button 124 and base 156. Piston 154 may allow release button 124 to move towards and from base 156. Spring 152 may be configured to press base 156 and release button 124 apart in response to a depressing force that compressed the spring being removed from release button 124. For example, spring 152 may be coiled around piston 154 and press a portion of piston 154 away from base 156. Base 156 may be mounted to mounting bracket 137. Thus, spring 152 may also press latch 142 into latch socket 140 or latch socket 144 and drive latch 142 into the latch sockets. Mounting bracket 137 may be mounted between adjacent beams 160 using fasteners (e.g., rivets, bolts, screws, or other fasteners) or adhesives.

By maintaining a tight fit between drum 130 and floor panel 112 (as shown in FIG. 6B), tie point 122 and floor panel 112 may provide a flat surface for use with an air cushion cargo shuttle. The flat surface may limit leakage of air and allow air cushion cargo shuttle 114 of FIG. 2 to pass over tie point 122 in a stowed position. Tie point 122 may then be deployed when air cushion cargo shuttle 114 is at a desired location to expose tie down locations for securing cargo.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment" "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A cargo management system comprising:
a floor panel (112) defining a recess (134); and
a tie point (122) disposed in the recess and configured to rotate about an axis.

2. The cargo management system of claim 1, wherein the tie point comprises a drum (130).

3. The cargo management system of claim 2, wherein the drum comprises a latch socket (140, 144).

4. The cargo management system of claim 3, further comprising a latch (142) configured to interface with the latch socket.

5. The cargo management system of claim 4, wherein the latch comprises a release button (124).

6. The cargo management system of claim 5, wherein the latch is configured to disengage the latch socket in response to the release button being depressed.

7. The cargo management system of claim 6, wherein the drum is configured to rotate in response to the latch disengaging the latch socket.

8. The cargo management system of claim 2, wherein a contour (138) of the drum matches a second contour (134) of the recess defined by the floor panel.

9. A rotatable tie point, comprising:
a drum (130) configured to rotate about an axis; and
a cleat (126) coupled to the drum.

10. The rotatable tie point of claim 9, wherein the drum comprises a latch socket (140).

11. The rotatable tie point of claim 10, further comprising a latch (142) configured to interface with the latch socket.

12. The rotatable tie point of claim 11, wherein the latch comprises a spring (152) configured to drive the latch into the latch socket.

13. The rotatable tie point of claim 11, wherein the drum is spring loaded to automatically rotate in response to the latch disengaging the latch socket.

14. The rotatable tie point of any of claims 9 to 13, wherein the drum comprises aluminum.

15. The rotatable tie point of any of claims 9 to 14, wherein the drum comprises a contoured surface (138) to limit air leakage along the contoured surface.
